Europäisches Patentamt

European Patent Office

Office européen des brevets

(11) Veröffentlichungsnummer: **0 062 110**
A2

## (12) EUROPÄISCHE PATENTANMELDUNG

(21) Anmeldenummer: 81110202.9

(22) Anmeldetag: 05.12.81

(51) Int. Cl.³: **F 24 H 1/32, F 24 H 1/44**

(30) Priorität: **28.01.81 DE 3102703**

(43) Veröffentlichungstag der Anmeldung: **13.10.82**
**Patentblatt 82/41**

(84) Benannte Vertragsstaaten: **AT BE CH DE FR GB IT LI NL SE**

(71) Anmelder: **Buderus Aktiengesellschaft, Sophienstrasse 32-34, D-6330 Wetzlar (DE)**

(72) Erfinder: **Stephan, Ernst-Wilhelm, Kirchberger Weg 20, D-6301 Staufenberg 1 (DE)**
Erfinder: **Klose, Egon, Birkenweg 1, D-6304 Lollar 1 (DE)**

(74) Vertreter: **Benner, Alwin, Dipl.-Ing., Buderus Aktiengesellschaft ZA-Patentabteilung Postfach 1220, D-6330 Wetzlar (DE)**

(54) Gliederheizkessel.

㊙ Dem Hinterglied (2) eines Gliederheizkessels wird ein zusätzliches Anschlußglied (6) nachgeschaltet, das zumindest an die untere Nabe (3') des Hintergliedes (2) angeschlossen ist. Im Anschlußglied (6) erfolgt eine Vorwärmung des Rücklaufwassers. Das an der Seite des Brennraumes (4) von den Flammen beaufschlagte Hinterglied (2) wird auch an seiner Rückseite noch von heißen Gasen bespült, wodurch Spannungen ausgeglichen werden.

Mehrere Anschlußglieder (6) zu einem Nachschalt-Gliedblock (11) zusammengefaßt wirken als nachgeschalteter Wärmeaustauscher zum weiteren Abkühlen des Abgases.

EP 0 062 110 A2

BUDERUS AKTIENGESELLSCHAFT
TP/F/B/EP 16-297

## Gliederheizkessel

Die Erfindung betrifft einen Gliederheizkessel nach dem Oberbegriff des Patentanspruches.

Gliederheizkessel dieser Art gehören zum altbekannten Stand der Technik. Die wasserführenden Kesselglieder schließen dabei einen Brennraum, mehrere Heizgaszüge und die zum Abgasstutzen führenden Abgaskanäle ein. Das Hinterglied bildet eine geschlossene Fläche und wird nur einseitig von den Brenngasen beaufschlagt. Das führt zu hohen Temperaturunterschieden zwischen der Innen- und Außenwand und somit zu großen Wärmespannungen. Zudem kann die Rückwand des Hintergliedes nicht mehr dem Wärmeaustausch dienen. Es ist nur ein Wärmeabbau der Heizgase im eigentlichen Kesselblock möglich.

Die Wärmespannungen im Hinterglied infolge großer Temperaturunterschiede sollen reduziert werden. Ferner soll ein größerer Wärmeabbau erzielt werden, wobei die gewünschte niedrigstmögliche Abgastemperatur erreicht werden soll.

Gemäß der Erfindung wird dieses durch die im Kennzeichen des Patentanspruches 1 genannte Maßnahme bewirkt.

Das nachgeschaltete Anschlußglied ermöglichst es, daß auch die Rückseite des Hintergliedes von den Abgasen bestrichen wird. Somit dient diese Seite auch noch dem Wärmeaustausch. Die Temperaturdifferenz von der Rückwand zu der direkt von der Brennerflamme beaufschlagten Innenwand ist wesentlich geringer. Hohe Wärmespannungen sind dadurch vermieden.

Das kühlere Rücklaufwasser durchströmt zunächst vollständig das Anschlußglied, um vorgewärmt in den eigentlichen Kesselkörper zu gelangen. Im Bereich des nachgeschalteten Anschlußgliedes erfolgt somit ein zusätzlicher guter Temperaturabbau, da eine große Temperaturdifferenz zwischen dem kühlen Rücklaufwasser und den Abgasen vorhanden ist. Der Anschluß an das Hinterglied ausschließlich an der unteren Nabe sorgt für ein einwandfreies Vorwärmen des Kesselwassers und läßt zudem eine freie Ausdehnung des Anschlußgliedes gegenüber dem Kessel zu. Es ist auch möglich, das Anschlußglied zusätzlich oben an das Hinterglied anzuschließen.

Es ist möglich, das Anschlußglied an der unteren Nabe durch einen Nippel mit dem Hinterglied zu verbinden, wie es bei der Verbindung von Kesselgliedern allgemein üblich ist. Durch eine entsprechende Kerngestaltung können auch das Anschlußglied und das Hinterglied im Gießverfahren als Einheit hergestellt werden. Der eigentliche Zweck, einen Heizgasschacht hinter dem Hinterglied zu schaffen und den Rücklauf durch das Anschlußglied zu leiten, wird in beiden Fällen erreicht.

Eine besonders vorteilhafte Weiterbildung der Erfindung liegt darin, daß dem Anschlußglied weitere Anschlußglieder

0062110

nachgeschaltet werden können, die jeweils an oberen und unteren Naben miteinander verbunden sind. Die Anschlußglieder bilden dabei einen Nachschalt-Gliedblock, der nur an einer Stelle wasserseitig mit dem Kesselblock verbunden ist. Je nach dem notwendigen weiteren Wärmeabbau der Abgase kann die benötigte Anzahl an Anschlußgliedern zusammengefügt werden. Ohne zusätzliche Einbauten ist auf diese Weise die geringstmögliche Abgastemperatur zu erzielen.

Bei einem solchen Nachschalt-Gliedblock ist es zweckmäßig, die Abgase von unten in die vertikalen Steigzüge einzuleiten und sie an Leitrippen vorbei zu einem zentralen Abgaskanal zu führen. Dabei kann unterhalb des Abgaskanales eine Kondenswasserschale sitzen, durch die evtl. ausgeschiedenes Kondenswasser nach außen in einem Entsor- gungsbehälter geleitet wird.

Es ist auch möglich, die Abgase oben in den Nachschalt- Gliedblock einzuleiten und sie an Leitrippen vorbei nach unten und von hier zum Abgaskanal zu leiten. In diesem Fall kann unterhalb des Abgaskanales und der unteren Nabe ein ungekühlter Fußrahmen zur Aufnahme der Kondenswasserschale vorgesehen werden. Die Reinigung der vertikalen Schächte erfolgt dabei von der Oberseite des Kessels her.

Nähere Einzelheiten sind der beigefügten Zeichnung, die ein Ausführungsbeispiel zeigt, zu entnehmen.

Es zeigt:

Fig. 1 und Fig. 2 : Je einen senkrechten Mittelschnitt durch einen Teil eines Gliederheizkessels,

Fig. 3 : Einen Schnitt durch einen Teil eines Kessels gemäß den Linien a-a aus Fig.5,

Fig. 4 : Einen senkrechten Mittelschnitt durch einen Teil eines Kessels mit einem angefügten Nachschalt-Gliedblock und

Fig. 5 und Fig. 6 : Die Ansicht eines Anschlußgliedes gemäß Fig. 4.

Der Heizkessel besitzt Mittelglieder 1 und ein Hinterglied 2 , die an Naben 3 miteinander verbunden sind. Die Kesselglieder 1,2 begrenzen einen Brennraum 4 , der in nicht dargestellte Heizgaszüge und in Abgassammelkanäle 5 mündet.

An die untere Nabe 3' des Hintergliedes 2 ist ein Anschlußglied 6 angefügt, welches mit der Rückwand des Hintergliedes 2 einen vertikalen Nachschaltzug 7 bildet. Der Nachschaltzug 7 , dessen Begrenzungsflächen mit Rippen zur Erhöhung des Wärmeaustausches besetzt sind, führt zu einem Abgaskanal 8 .

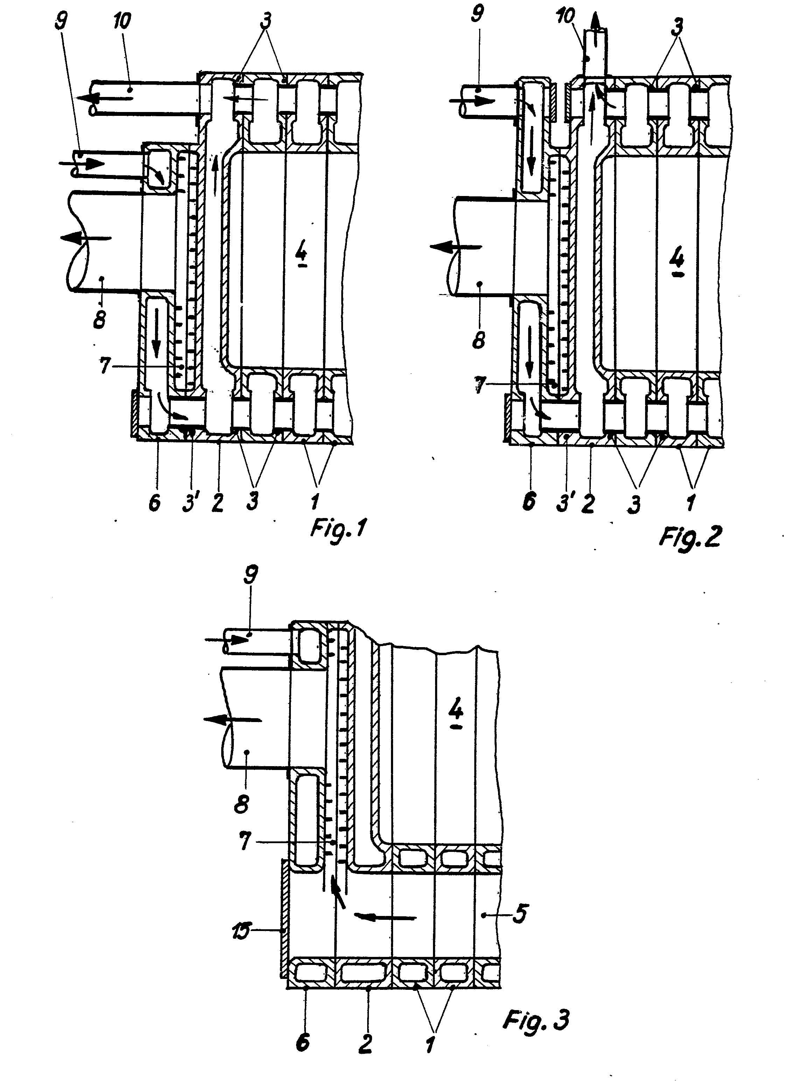

Der Heizungsrücklauf 9 mündet in die obere Nabe des Anschlußgliedes 6 . Der Heizungsvorlauf 10 geht von der oberen Nabe des Hintergliedes 2 waagerecht ab, wenn das Anschlußglied 6 entsprechend niedriger gebaut ist (Fig. 1). Bei gleicher Höhe des Anschlußgliedes 6 und des Hintergliedes 2 geht der Heizungsvorlauf 10 vom Hinterglied 2 oder auch von einem hinteren Mittelglied 1 senkrecht nach oben ab (Fig. 2).

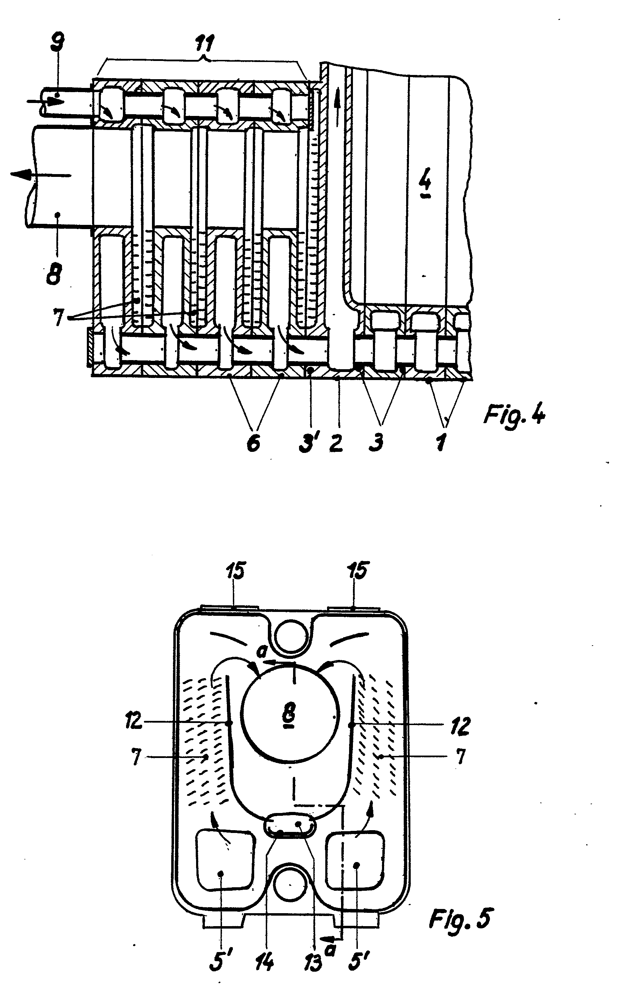

Mehrere Anschlußglieder 6 hintereinander bilden einen Nachschalt-Gliedblock 11 . Aus unteren Abgassammelkanälen 5' verteilt sich gemäß Fig. 5 das Abgas nach oben und strömt an Umlenkrippen 12 vorbei zum Abgaskanal 8 . In eine horizontale Durchbrechung 13 unter dem Abgaskanal 8 ist eine Kondenswasserschale 14 eingeschoben, die evtl. anfallendes Kondenswasser nach außen leitet. Die Reinigung der Züge erfolgt durch Öffnungen nach Entfernung von Putzdeckeln 15 .

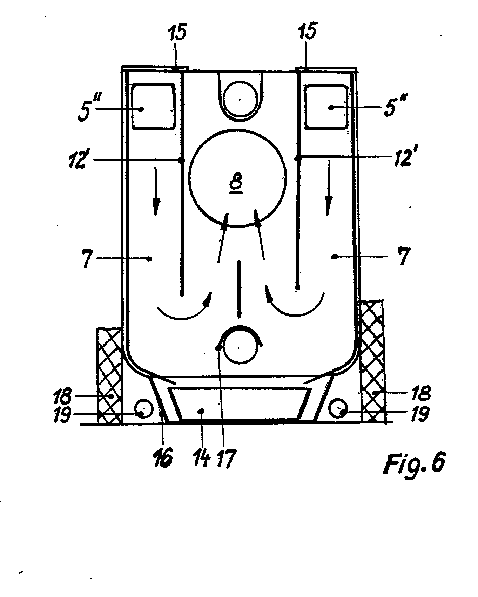

Gemäß Fig. 6 gelangt das Abgas durch obere Abgassammelkanäle 5'' in die senkrechten Schächte 7 . Es strömt an Umlenkrippen 12' nach unten und von hier zum zentralen Abgaskanal 8 . Die Anschlußglieder 6 besitzen dabei je einen unteren ungekühlten Fußrahmen 16 zur Aufnahme der Kondenswasserschale 14 . Angegossene Schutzrippen 17 lassen das Kondensat ohne vollständige Benetzung der unteren Nabe abtropfen. Zwischen dem Fußrahmen 16 und dem Kesselgehäuse 18 liegen Verbrennungsluftkanäle 19 . In diesen Wird die Verbrennungsluft vorgewärmt.

Patentansprüche
_____

1. Gliederheizkessel bestehend aus senkrechten, an oberen und unteren Naben miteinander verbundenen, einen Brennraum und mehrere Heizgaszüge bildenden Kesselgliedern und einem den Brennraum rückwärts begrenzenden Hinterglied, dadurch gekennzeichnet, daß dem Hinterglied (2) mindestens ein zusätzliches, insbesondere mit dessen unterer Nabe (3') verbundenes, im oberen Bereich an den Heizungsrücklauf (9) angeschlossenes Anschlußglied (6) nachgeschaltet ist.

2. Gliederheizkessel nach Anspruch 1, dadurch gekennzeichnet, daß in einen vertikalen Schacht (7) zwischen dem Hinterglied (2) und dem Anschlußglied (6) Abgassammelkanäle (5) als Fortsetzung der Heizgaszüge münden und daß dieser Schacht (7) zu einem Abgaskanal (8) führt.

3. Gliederheizkessel nach den Ansprüchen 1 und 2, dadurch gekennzeichnet, daß das Anschlußglied (6) mit dem Hinterglied (2) an der unteren und ggfs. auch an der oberen Nabe durch einen eingefügten Nippel verbunden ist.

4. Gliederheizkessel nach den Ansprüchen 1 und 2, dadurch gekennzeichnet, daß das Anschlußglied (6) und das Hinterglied (2) eine in einem einheitlichen Fertigungsprozeß hergestellte, an der unteren und ggfs. auch an der oberen Nabe verbundene Einheit bilden.

5. Gliederheizkessel nach den Ansprüchen 1 bis 4, dadurch gekennzeichnet, daß dem Anschlußglied weitere Anschlußglieder nachgeschaltet sind, die jeweils an oberen und unteren Naben zu einem Nachschalt-Gliedblock (11) hintereinander verbunden sind.

6. Gliederheizkessel nach Anspruch 5, dadurch gekennzeichnet, daß in die vertikalen Schächte (7) zwischen den Anschlußgliedern (6) Abgassammelkanäle (5') als Fortsetzung der Heizgaszüge münden und daß diese Schächte (7) zu einem Abgaskanal (8) führen.

7. Gliederheizkessel nach den Ansprüchen 5 und 6, dadurch gekennzeichnet, daß die Abgassammelkanäle (5') in den unteren Teil der vertikalen Schächte (7) einmünden und durch aufwärts führende Umlenkrippen (12) von dem zentral angeordneten Abgaskanal (8) getrennt sind und daß die Anschlußglieder (6) unterhalb des Abgaskanales (8) horizontale Durchbrechungen (13) zum Einfügen einer Kondenswasserschale (12) besitzen (Fig. 5).

8. Gliederheizkessel nach den Ansprüchen 5 und 6, dadurch gekennzeichnet, daß die Abgassammelkanäle (5'') in den oberen Teil der vertikalen Schächte (7) einmünden und durch abwärts führende Umlenkrippen (12') von dem zentral angeordneten Abgaskanal (8) getrennt sind und daß die Anschlußglieder (6) untere ungekühlte Fußrahmen (16) zum Einfügen einer Kondenswasserschale (14) besitzen (Fig.6).

9. Gliederheizkessel nach Anspruch 8, gekennzeichnet durch Verbrennungsluftkanäle (19) seitlich neben dem Fußrahmen (16).

Fig.1

Fig.2

Fig.3

0062110

Fig. 4

Fig. 5

Fig. 6